# EUROPEAN PATENT SPECIFICATION

(11) **EP 4 552 871 B1**
(45) Date of publication and mention of the grant of the patent: **25.03.2026**
(21) Application number: 23208808.8
(22) Date of filing: 09.11.2023
(51) Int. Cl.: B60H 1/00, G01N 15/06, G01N 33/00, G01M 17/007

(54) **SYSTEM AND METHOD FOR TESTING A CABIN AIR QUALITY COMPONENT OF A VEHICLE**
SYSTEM UND VERFAHREN ZUM TESTEN EINER KABINENLUFTQUALITÄTSKOMPONENTE EINES FAHRZEUGS
SYSTÈME ET PROCÉDÉ DE TEST D'UN COMPOSANT DE QUALITÉ D'AIR DE CABINE D'UN VÉHICULE

(43) Date of publication of application: 14.05.2025
(73) Proprietor: Volvo Car Corporation, 405 31 Göteborg (SE)
(72) Inventor: SEBASTIAN, Aleksandra, 40531 Göteborg (SE); LÖFVENDAHL, Anders, 40531 Göteborg (SE); MILLBERG, Adam, 40531 Göteborg (SE)
(74) Representative: Maiwald GmbH

(56) References cited:
- EP-A1- 3 845 404
- FR-A3- 2 931 944

## Description

### TECHNICAL FIELD

The present invention relates to a system for testing a cabin air quality component of a vehicle.

Additionally, the present invention is directed to a method for testing a cabin air quality component of a vehicle.

### BACKGROUND ART

Air quality inside a passenger cabin of a vehicle is an important aspect for users of a vehicle. Especially in cases in which the vehicle is used in potentially or effectively polluted environments, such as in big cities, the air quality inside the passenger cabin should be improved with respect to the environment, e.g. by being purified. This may be done using one or more cabin air quality components.

Thus, during development of cabin air quality components, i.e. components of the vehicle at least contributing to influencing the air quality inside the passenger cabin, one has to make sure that the cabin air quality components are able to provide the required functionality and performance. To this end, cabin air quality components usually undergo an extensive test program which includes test drives in different environments.

FR 2 931 944 A3 shows an air quality measurement bench comprising a road traffic simulator. EP 3 845 404 A1 describes a device and method for monitoring a state of an air filter for a passenger compartment of a vehicle.

### SUMMARY

It is an objective of the present invention to facilitate testing of cabin air quality components. At the same time the meaningfulness of the tests shall not be compromised.

The problem is at least partially solved or alleviated by the subject matter of the independent claims of the present invention, wherein further examples are incorporated in the dependent claims.

According to a first aspect, there is provided a system for testing a cabin air quality component of a vehicle. The system comprises a duct, wherein the duct comprises a mechanical connection interface configured to be coupled to an air inlet of the vehicle such that the duct and the air inlet of the vehicle are fluidically connected. The duct comprises a first inlet configured to receive a carrier substance and a second inlet. A test substance provider is fluidically connected to the second inlet. Moreover, the system comprises a first detector configured to detect the test substance. Moreover, the first detector is configured to detect the test substance in an interior of the vehicle or in an exterior of the vehicle. This system allows to test the cabin air quality component while the associated vehicle is located in a workshop, garage or test chamber. As has been mentioned before, a cabin air quality component is to be understood as a part or an assembly of parts configured to at least contribute to modifying the quality of cabin air in at least one aspect. Examples of cabin air quality components include filters, other purifying devices such as so-called advanced air cleaners, entire heating, ventilation and air conditioning systems (HVAC systems), particle sensors and gas sensors. In this context, the test substance provider is configured to provide an amount of a test substance which is provided at the second inlet of the duct. The test substance may be a pollutant or any other substance on which the cabin air quality component under test shall have an effect. The test substance for example comprises a gas such as carbon monoxide (CO), sulfur dioxide (SO2) or nitrogen oxide (NOx). Additionally or alternatively, the test substance comprises a plurality of particles. The carrier substance may be ambient air or any other substance used for diluting the test substance. Additionally, using such a system, the test substance may be provided to the cabin air quality component under test in a repetitive and systematic manner. This is independent from an environmental condition such as an environmental pollution or weather conditions. In the context of the present system, the duct not only fulfills the functionality to reliably provide the test substance and the carrier substance to the cabin air quality component under test, but also allows to reliably mix the test substance and the carrier substance. For this reason, the duct may as well be called an inlet chamber and/or a mixing chamber. Reliably mixing the carrier substance and the test substance allows to subject the cabin air quality component under test to a uniform inflow. Additionally, such a system is structurally simple and relatively compact.

In the context of the present invention, the mechanical connection interface may be configured to couple the duct to the air inlet of the vehicle by any suitable means. In an example, the mechanical connection interface of the duct may be at least temporarily glued to the air inlet. According to another example, the mechanical connection interface of the duct may be connected to the air inlet using a gas-tight tape that is wrapped around an interface portion of the duct and the air inlet. According to still another example, the mechanical connection interface may be clamped to the air inlet.

Furthermore, it is understood that the duct is gas-tight except for the mentioned inlets and outlets. Moreover, to this end, the duct may be directly coupled to the air inlet of the vehicle, i.e. without intermediary components.

According to the invention, the system further comprises a mixing device arranged inside the duct. Such a mixing device further enhances the uniformity by mixing of the carrier substance and the test substance. The mixing device comprises an active mixing device such as a fan or blower. Additionally, the mixing device may comprise a passive mixing device such as a chicanery.

According to an example, the duct comprises an elongated portion, wherein a length of the elongated portion extends along a flow direction and exceeds a biggest diameter of the elongated portion. The diameter is measured transverse to the flow direction. The elongated portion allows to reliably mix the carrier substance and the test substance. Consequently, a highly uniform inflow may be guaranteed for the cabin air quality component under test. According to an example, the length of the elongated portion corresponds to at least two times the biggest diameter. According to a further example, the length of the elongated portion corresponds to at least three times the biggest diameter. Having a comparatively long elongated portion allows to further increase the uniformity of the inflow.

In an example, the elongated portion is tube-shaped. In this context, tube-shaped means that the length extending along the flow direction is very large as compared to the diameter. This allows to mix the carrier substance and the test substance with particular reliability.

In an example, the duct comprises at least one conical portion, wherein the conical portion is opening towards the mechanical interface. In other words, the conical portion opens in a direction away from the first inlet. This further facilitates the mixing of the carrier substance and the test substance. It is noted that the conical portion and the elongated portion may be realized by the same portion of the duct or by separate portions of the duct.

According to an example, the duct comprises two conical portions arranged adjacent to one another, wherein the two conical portions differ in their respective opening angles. According to an example, the conical portion having the larger opening angle is arranged closer to the mechanical interface. In this context, the conical portion having the larger opening angle allows to configure the mechanical interface such that it can be reliably coupled to the air inlet of the vehicle. At the same time, the comparatively smooth surfaces defining the conical portion do not hinder or otherwise negatively influence a flow of carrier substance and test substance. The conical portion having the smaller opening angle may be specifically designed as a mixing portion for the carrier substance and the test substance. Thus, using two conical portions allows to reliably couple the duct to the air inlet of the vehicle and to reliably mix the carrier substance and the test substance inside the duct.

According to an example, the system further comprises a second detector configured to detect the test substance. Additionally, the second detector is configured to detect the test substance in the interior of the vehicle or in the exterior of the vehicle. According to an example, the first detector may be configured to detect the test substance in the interior of the vehicle and the second detector may be configured to detect the test substance in the exterior of the vehicle or vice versa. Using a second detector, a performance of the cabin air quality component may be evaluated by calculating a difference between detecting results provided by the first detector and detecting results provided by the second detector. Consequently, the performance of the cabin quality component may be evaluated in a very precise manner.

It is noted that in a case in which the system only comprises a first detector, a quantity of test substance provided by the test substance provider may be known. In this case, a performance of the cabin air quality component may be evaluated by calculating a difference between the detecting results of the first detector and the known quantity of test substance. It is understood that a known quantity may be an absolute quantity or a quantity defined by a mass flow or a volume flow of the test substance.

In an example, the test substance provider comprises a particle generator and/or a gas supply. Using a particle generator, particles with certain physical and chemical properties may be generated and used for testing the cabin air quality component. The particle generator may comprise an aerosol generator. Additionally or alternatively, the particle generator may comprise a soot generator. The gas supply may be configured to provide noxious gases such as nitrogen dioxide (NO2), carbon monoxide (CO), sulfur dioxide (SO2), ozone (O3), carbon dioxide (CO2), or volatile organic compounds (VOCs). The gas supply may be realized by a gas bottle containing the relevant gas. Thus, the cabin air quality component may be tested with respect to test substances that are relevant during use of the vehicle.

According to an example, the test substance provider comprises a plurality of particle generators. This means that two or more particle generators are used in order to generate particles forming part of the test substance. This offers the possibility to generate test substance mixtures being similar or identical to different environments in which the vehicle may be used, e.g. urban traffic environments.

According to another example, the test substance provider comprises a plurality of gas supplies. This means that two or more different gases may be supplied. This offers the possibility to generate test substance mixtures being similar or identical to different environments in which the vehicle may be used, e.g. urban traffic environments.

It is noted that the above examples may as well be combined, i.e. the test substance provider may comprise both a plurality of particle generators and a plurality of gas supplies.

In an example, the first detector comprises a gas sensor and/or a particle counter. A gas sensor is configured to detect an associated gas or a plurality of associated gases. Moreover, the gas sensor may be configured to quantify the detected gases. The particle counter is configured to provide an indication of an amount of particles. Optionally, the particle counter may be configured to indicate an amount of particles as a function of a particle diameter or another characteristic of the particle. Consequently, a performance of the cabin air quality component under test may be evaluated with high precision.

It is noted that also the second detector may comprise a gas sensor and/or a particle counter. As before, a gas sensor is configured to detect an associated gas or a plurality of associated gases. Moreover, the gas sensor may be configured to quantify the detected gases. The particle counter is configured to provide an indication of an amount of particles. Optionally, the particle counter may be configured to indicate an amount of particles as a function of a particle diameter or another characteristic of the particle. In this context, the amount of particles may be indicated for a set of predefined intervals of particle diameters, e.g. from 10-14 nm, 15-37 nm etc. Consequently, a performance of the cabin air quality component under test may be evaluated with high precision.

According to a second aspect, there is provided a method for testing a cabin air quality component of a vehicle. The method comprises
- mechanically coupling a duct to an air inlet of the vehicle such that the duct and the air inlet of the vehicle are fluidically connected,
- supplying a mixture comprising a carrier substance and a test substance at the air inlet of the vehicle via the duct,
- detecting the test substance at a location associated with an air outlet of the cabin air quality component or at a location associated with an exterior of the vehicle.

This method allows to test the cabin air quality component while the associated vehicle is located in a workshop, garage or test chamber. In this context, a location associated with the air outlet of the cabin air quality component may be located inside a passenger cabin of the vehicle, e.g. at or close to a center of the passenger cabin. As has been mentioned before, a cabin air quality component is to be understood as a part or an assembly of parts configured at least contribute to modifying the quality of cabin air in at least one aspect. Examples of cabin air quality components include filters, other purifying devices such as so-called advanced air cleaners, entire heating, ventilation and air conditioning systems (HVAC systems), particle sensors and gas sensors. The test substance provided to the air inlet of the vehicle may be a pollutant or any other substance on which the cabin air quality component under test shall have an effect. The test substance for example comprises a gas such as carbon monoxide (CO), sulfur dioxide (SO2) or nitrogen oxide (NOx). Additionally or alternatively, the test substance comprises a plurality of particles. The carrier substance may be ambient air or any other substance used for diluting the test substance. Additionally, using such a method, the test substance may be provided to the cabin air quality component under test in a repetitive and systematic manner. This is independent from an environmental condition such as an environmental pollution or weather conditions. In the context of the present method, the duct not only fulfills the functionality to reliably provide the test substance and the carrier substance to the cabin air quality component under test, but also allows to reliably mix the test substance and the carrier substance. For this reason, the duct may as well be called an inlet chamber and/or a mixing chamber. Reliably mixing the carrier substance and the test substance allows to subject the cabin air quality component under test to a uniform inflow.

According to the invention, the method further comprises mixing the carrier substance and the test substance in the duct. In this context, the mixing is active. To this end, the duct may comprise a fan or blower. This allows to provide a uniform inflow to the air inlet of the vehicle. Additionally, the mixing may be passive.

In an example, the method according to the present invention is used in order to carry out a performance test of the cabin air quality component. This means that the objective of the test is to determine or verify a maximum impact the cabin air quality component can have on the test substance.

In another example, the method according to the present invention is used in order to carry out an aging test of the cabin air quality component. This means that the objective of the test is to evaluate performance variations over time, i.e. to determine whether and/or to which extent a performance of the cabin air quality component reduces over time.

According to an example, the method involves supplying the mixture at a volume flow of 50 to 80 liters per second. This corresponds to volume flows to which the air inlet of the vehicle is subject while driving.

According to an example, the method is carried out in an environment having controllable temperature and controllable humidity. To this end, the vehicle may be located in a workshop, in a garage or, more generally speaking, in a test chamber. In these examples, the workshop, garage or test chamber may comprise an air conditioning system configured to keep temperature and/or humidity constant, e.g. 22°C and 40% relative humidity (RH). According to a further example, the environment may comprise comparatively clean air. This may be defined by less than 1µg/m³ of particles having a diameter of 2.5 µm or smaller (PM2.5).

In an example, the test substance comprises at least one of a salt, a Di-Ethyl-Hexyl-Sebacat and soot. The salt may be Sodium Chloride (NaCl). Di-Ethyl-Hexyl-Sebacat often is abbreviated as DEHS. Salt, Di-Ethyl-Hexyl-Sebacat and soot are frequent pollutants. Thus, using a test substance comprising at least one of a salt, a Di-Ethyl-Hexyl-Sebacat and soot allows to test the cabin air quality component under realistic conditions. This has the effect that the test results are highly meaningful.

In an example, the mixture comprises a constant concentration of the test substance. This allows to test the cabin air quality component in a systematic manner, thereby excluding undesired environmental factors. In case the test substance comprises particles, the concentration is for example 100µg/m³ of particles having a diameter of 2.5 µm or smaller (PM2.5).

In an example, detecting the test substance comprises determining a mass distribution associated with the test substance and/or determining a removal efficiency associated with the test substance. The mass distribution may be determined as a function of a particle diameter. This means that for a plurality of particle diameters, a corresponding mass of particles is determined. In this context, the mass of particles may be determined as an absolute value. Alternatively, the mass of particles may be determined as a concentration, e.g. mass per volume. Additionally or alternatively, the amount of particles may be indicated for a set of predefined intervals of particle diameters, e.g. from 10-14 nm, 15-37 nm etc. In an example in which the test substance comprises different types of particles, a mass distribution may be determined for each type of particles. Also a removal efficiency may be determined as a function of a particle diameter, e.g. for predefined intervals of diameters. In case different types of particles are used, the removal efficiency may be determined for each type of particles. In this context, the removal efficiency describes a portion of particles that is removed from the inflow using the cabin air quality component under test. In all of the above examples, a performance of the cabin air quality component under test may be determined in a precise and meaningful manner.

It should be noted that the above examples may be combined with each other irrespective of the aspect involved. Accordingly, the method may be combined with structural features and, likewise, the system may be combined with features described above with regard to the method.

These and other aspects of the present invention will become apparent from and elucidated with reference to the examples described hereinafter.

### BRIEF DESCRIPTION OF DRAWINGS

Examples of the invention will be described in the following with reference to the following drawings.
- Figure 1: shows a system according to the present invention for testing a cabin air quality component of a vehicle being used on a vehicle, wherein a method for testing a cabin air quality component of the vehicle is carried out,
- Figure 2: shows a duct of the system of Figure 1 in a separate view, and
- Figures 3 and 4: show example test results.

### DETAILED DESCRIPTION

The Figures are merely schematic representations and serve only to illustrate examples of the invention. Identical or equivalent elements are in principle provided with the same reference signs.

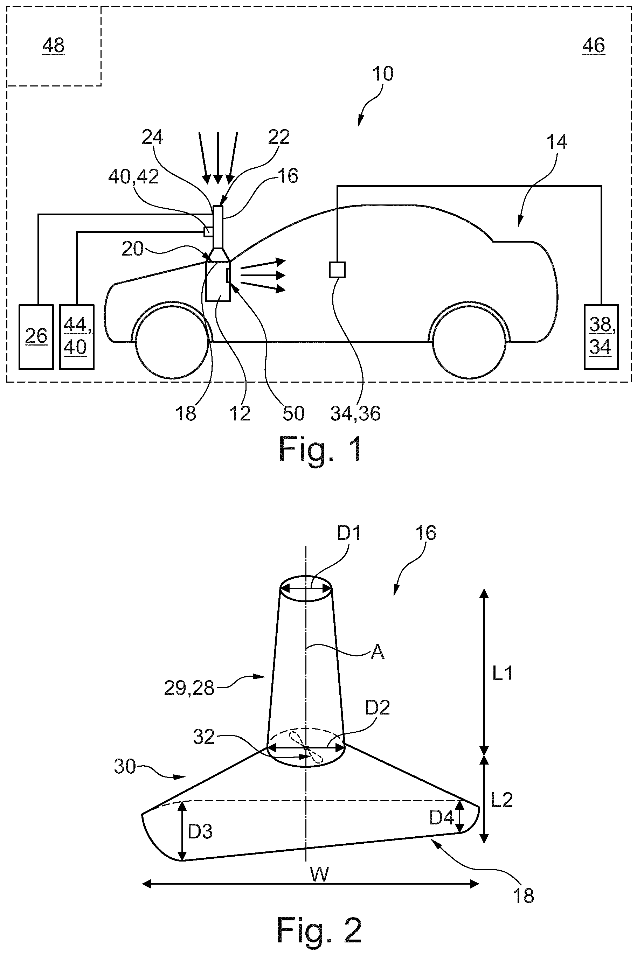

Figure 1 shows a system 10 for testing a cabin air quality component 12 of a vehicle 14.

In the present example, the cabin air quality component 12 is a heating, ventilation and air conditioning system of the vehicle 14.

It is noted that in the representation of Figure 1, the system 10 is installed on the vehicle 14, even though the vehicle 14 does not form part of the system 10.

The system comprises a duct 16.

The duct 16 has a mechanical connection interface 18 which is configured to be coupled to an air inlet 20 of the vehicle 14.

In the example of Figure 1, the air inlet 20 of the vehicle 14 is an air inlet 20 of the cabin air quality component 12. Moreover, in the example of Figure 1, the duct 16 is coupled to the air inlet 20 such that the duct 16 and the air inlet 20 of the vehicle 14 are fluidically connected.

Moreover, the duct 16 comprises a first inlet 22 configured to receive a carrier substance and a second inlet 24. In the present example, the carrier substance is ambient air.

The system 10 additionally comprises a test substance provider 26 which is fluidically connected to the second inlet 24 using a hose. In the present example, the test substance provider 26 is a particle generator. More precisely, the particle generator is configured to generate soot particles having a diameter of 40 nm to 200 nm.

The flow of carrier substance and test substance through the cabin air quality component 12 under test is indicated by a plurality of arrows in Figure 1.

The duct 16 is shown in Figure 2 in more detail.

In the present example, the duct comprises two conical portions 28, 30.

The first conical portion 28 is arranged adjacent to the first inlet 22.

The first conical portion 28 is elongated and tube-shaped. Thus, the first conical portion 28 may as well be designated as an elongated portion 29. More specifically, in the present example, the first conical portion 28 has a circular cross-section, wherein a first end of the first conical portion 28 forms the inlet 22. The first end has a diameter D1 of 60 mm.

The second end of the first conical portion 28 is arranged opposite the first end, i.e. remote from the first inlet 22. The second and has a diameter D2 of 120 mm.

The first conical portion 28 has a length L1 of 300 mm. This length L1 is measured along a middle axis A of the first conical portion 28 which corresponds to an airflow direction as will be explained further below.

The second conical portion 30 is arranged adjacent to the first conical portion 28. This means that the second conical portion 30 is connected to the second end of the first conical portion 28.

Thus a first end of the second conical portion 30 is substantially circular and has the same diameter D2 as the second end of the first conical portion 28.

The second end of the second conical portion 30 which is arranged opposite the first end of the second conical portion 30 is formed such that it fully covers the air inlet 20 of the vehicle 14.

This means that the second end of the second conical portion 30 has substantially the same form as an outer contour of the air inlet 20.

In the present example, this outer contour comprises two half-circles opening towards one another and being connected by two straight lines such that the two straight lines and the two diameters form a trapezium.

In the present example, the first half-circle which is shown on the left side in Figure 2 has a diameter D3 of 180 mm. The second half-circle which is shown on the right side in Figure 2 has a diameter D4 of 130 mm. The respective ends of these half-circles are connected by straight lines. The second end has a width W of 480 mm.

Thus, the second conical portion 30 evolves from the substantially circular first end thereof to the second end thereof. A length L2 of the second conical portion 30 is 140 mm.

As can be seen from Figure 2, the second conical portion 30 is opening towards the mechanical interface 18.

Moreover, the second conical portion 30 has an opening angle different from the first conical portion 28.

Optionally, the duct 16 comprises a mixing device 32 arranged at an interface between the first conical portion 28 and the second conical portion 30. In Figure 2, the optional mixing device is schematically represented as a fan using dashed lines.

The system 10 additionally comprises a first detector 34 configured to detect the test substance. In the present example, the first detector 34 comprises a probe head 36 which is arranged in an interior of the vehicle 14, more precisely inside the passenger cabin of the vehicle 14.

The first detector 34 additionally comprises a particle counter 38 fluidically connected to the probe head 36 via a hose. The particle counter 38 is arranged outside the vehicle 14.

Furthermore, the system 10 comprises a second detector 40 configured to detect the test substance. In the present example, the second detector 40 comprises a probe head 42 which is configured to detect the test substance inside the duct 16. Thus, even though in Figure 1 the probe head 42 is arranged on an outside of the duct 16, the probe head 42 is fluidically connected to an inside of the duct 16.

The probe head 42 is arranged downstream with respect to the second inlet 24.

The second detector 40 additionally comprises a particle counter 44 fluidically connected to the probe head 42 via a hose. The particle counter 44 is arranged outside the vehicle 14.

Using the system 10 for testing a cabin air quality component 12, a method for testing a cabin air quality component 12 may be carried out.

In the present example, the method is carried out in an environment having controllable temperature and controllable humidity. To this end, the vehicle 14 and the system 10 are placed in a test chamber 46 being equipped with an air conditioning system 48.

The air conditioning system 48 is configured to keep a temperature within the test chamber 46 constant. Moreover, the air conditioning system 48 is configured to keep a relative humidity inside the test chamber 46 constant.

Moreover, the air conditioning system 48 comprises a filter guaranteeing that less than 1µg/m³ of particles having a diameter of 2.5 µm or smaller (PM2. 5) are present inside the test chamber 46.

In order to carry out the method, the duct 16 is mechanically coupled to the air inlet 20 of the vehicle 16. Consequently, the duct 16 and the air inlet 20 are fluidically connected.

Subsequently, a mixture comprising the carrier substance and the test substance is supplied at the air inlet 20 of the vehicle 14 via the duct 16.

In this context, the test substance is provided inside the duct 16 via the second inlet 24 which is connected to the test substance provider 26.

The carrier substance is formed by the ambient air present inside the test chamber 46. This carrier substance enters the duct 16 via the first inlet 22 (cf. arrows in Figure 1).

Thus, the present method also comprises mixing the carrier substance and the test substance in the duct 16. If the optional mixing device 32 is provided, the mixing may be done actively using this mixing device 32.

Otherwise, the mixing is done passively, i.e. by having the carrier substance and the test substance flow along an extension of the duct 16.

In the present example, a constant concentration of the test substance is provided using the test substance provider 26.

Furthermore, the test substance, in the present examples soot particles, is detected at a location associated with an air outlet 50 of the cabin air quality component 12. In the present example, the air outlet 50 of the cabin air quality component is associated to an interior of the passenger cabin of the vehicle 14. More precisely, the air outlet 50 is arranged in an interior of the passenger cabin of the vehicle 14.

Consequently, the test substance detected using the first detector 34 may be associated with the air outlet 50 of the cabin air quality component 12. More precisely, the first detector 34 detects the test substance inside the passenger cabin of the vehicle 14.

Moreover, the test substance, in the present example soot particles, is detected at a location associated with an exterior of the vehicle 14.

In the present example, the second detector 40 is arranged upstream of the air inlet 20 of the vehicle 14 and, thus, the detection results provided by the second detector 40 may be associated with the exterior of the vehicle 14. More precisely, the second detector 40, in particular the probe head 42, is arranged in an exterior of the vehicle 14.

In the present example, detecting the test substance comprises determining a mass distribution associated with the test substance. To this end, both the first detector 34 and the second detector 40 determine masses of particles as a function of a particle diameter. In other words, each of the first detector 34 and the second detector 40 determine masses of particles falling within a predefined range of diameters.

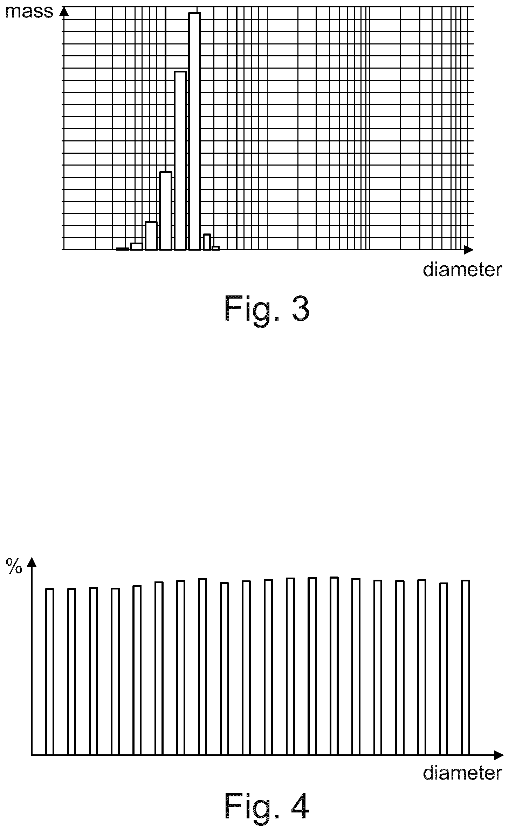

Due to the arrangement of the probe heads 36, 42, the mass distribution determined using the first detector 34 is associated with an interior of the vehicle 14 and the mass distribution determined using the second detector 40 is associated with an exterior of the vehicle 14. More precisely, the mass distribution determined using the second detector 40 characterizes the mixture of test substance and carrier substance which enters the air inlet 20 of the vehicle 14. An example of such a mass distribution is shown in Figure 3. This mass distribution shows masses of particles (cf. vertical axis) as a function of a particle diameter (cf. horizontal axis).

The mass distributions determined using the first detector 34 and the second detector 40 may be compared. In an example, the masses detected by the second detector 40 may be subtracted from the masses detected by the first detector 34 or vice versa. This is done for every diameter of particles or for predefined intervals of diameters, e.g. from 10-14 nm, 15-37 nm etc. Consequently, an influence of the cabin air quality component 12 on the test substance may be assessed.

To this end, a removal efficiency of the cabin air quality component 12 is determined. The removal efficiency is determined as a ratio, e.g. expressed as a percentage, of particles withheld by the cabin air quality component 12 with respect to the particles supplied to the cabin air quality component 12. This is done as a function of a particle diameter or for predefined intervals of diameters, e.g. from 10-14 nm, 15-37 nm etc.

In doing so, the detection results of the first detector 34 may be subtracted from the detection results of the second detector 40. An example removal efficiency is shown in Figure 4. The removal efficiency (cf. vertical axis) in Figure 4 is provided as a function of particle diameters (cf. horizontal axis).

In the above examples, only one particle generator has been used which is configured to generate soot particles. This has been done for the ease of explanation only. It is understood that more than one particle generators may be used. For example, a particle generator comprising a 2% sodium chloride (NaCl) solution for generation aerosol particles with diameters of 50 nm to 400 nm may be used in addition or as an alternative to the particle generator configured to provide soot particles. According to a further example, a particle generator configured to generate aerosol particles comprising Di-Ethyl-Hexyl-Sebacat (DEHS) and having a diameter of 100nm to 2500 nm may be used. Such a particle generator may be used in addition to the particle generators mentioned before or as an alternative. Consequently, even though in the afore-mentioned examples the test substance is soot particles, the test substance may comprise at least one of a salt, a Di-Ethyl-Hexyl-Sebacat and soot.

According to a further example, the test substance provider 26 may comprise a gas supply. It is noted that the gas supply may be provided in addition to one or more particle generators or as an alternative thereto. The gas supply may be configured to supply one or more noxious gases such as nitrogen dioxide (NO2), carbon monoxide (CO), sulfur dioxide (SO2), ozone (O3), carbon dioxide (CO2), volatile organic compounds (VOCs) or any combination thereof.

It is noted that it is also possible to use a plurality of particle generators and a plurality of gas supplies in combination.

Moreover, it is understood that both the first detector and the second detector need to match the test substance. This means that in a case in which the test substance comprise more than one component, a plurality of first detectors and/or a plurality of second detectors may be used.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: system for testing a cabin air quality component
- 12: cabin air quality component
- 14: vehicle
- 16: duct
- 18: mechanical connection interface
- 20: air inlet of the vehicle
- 22: first inlet
- 24: second inlet
- 26: test substance provider
- 28: conical portion of the duct
- 29: elongated portion
- 30: conical portion of the duct
- 32: mixing device
- 34: first detector
- 36: probe head of the first detector
- 38: particle counter of the first detector
- 40: second detector
- 42: probe head of the second detector
- 44: particle counter of the second detector
- 46: test chamber
- 48: air conditioning system
- 50: air outlet of the cabin air quality component

- A: middle axis
- D1: diameter
- D2: diameter
- D3: diameter
- D4: diameter
- L1: length
- L2: length
- W: width

## Claims

1. A system (10) for testing a cabin air quality component (12) of a vehicle (14), the system (10) comprising
a duct (16), wherein the duct (16) comprises a mechanical connection interface (18) configured to be coupled to an air inlet (20) of the vehicle (14) such that the duct (16) and the air inlet (20) of the vehicle (14) are fluidically connected, and wherein the duct (16) comprises a first inlet (22) configured to receive a carrier substance and a second inlet (24),
a test substance provider (26) fluidically connected to the second inlet (24),
a first detector (34) configured to detect the test substance and configured to detect the test substance in an interior of the vehicle (14) or in an exterior of the vehicle (14), and
**characterised by**
an active mixing device (32) arranged inside the duct (16).

2. The system (10) of claim 1, wherein the duct (16) comprises an elongated portion (29), wherein a length (L1) of the elongated portion (29) extending along a flow direction exceeds a biggest diameter (D2) of the elongated portion (29), wherein the diameter (D2) is measured transverse to the flow direction.

3. The system (10) of claim 2, wherein the elongated portion (29) is tube-shaped.

4. The system (10) of any one of the preceding claims, wherein the duct (16) comprises at least one conical portion (28, 30), wherein the conical portion (28, 30) is opening towards the mechanical interface (18).

5. The system (10) of claim 4, wherein the duct (16) comprises two conical portions (28, 30) arranged adjacent to one another, wherein the two conical portions (28, 30) differ in their respective opening angles.

6. The system (10) of any one of the preceding claims, further comprising a second detector (40) configured to detect the test substance and configured to detect the test substance in the interior of the vehicle (14) or in the exterior of the vehicle (14).

7. The system (10) of any one of the preceding claims, wherein the test substance provider (26) comprises a particle generator and/or a gas supply.

8. The system (10) of any one of the preceding claims, wherein the first detector (34) comprises a gas sensor and/or a particle counter.

9. A method for testing a cabin air quality component (12) of a vehicle (14), the method comprising
- mechanically coupling a duct (16) to an air inlet (20) of the vehicle (14) such that the duct (16) and the air inlet (20) of the vehicle (14) are fluidically connected,
- actively mixing a carrier substance and a test substance in the duct (16) by an active mixing device (32) arranged inside the duct (16),
- supplying a mixture comprising the carrier substance and the test substance at the air inlet (20) of the vehicle (14) via the duct (16),
- detecting the test substance at a location associated with an air outlet (50) of the cabin air quality component (12) or at a location associated with an exterior of the vehicle (14).

10. The method of claim 9, wherein the method is carried out in an environment having controllable temperature and controllable humidity.

11. The method of any one of claims 9 or 10, wherein the test substance comprises at least one of a salt, a Di-Ethyl-Hexyl-Sebacat and soot.

12. The method of any one of claims 9 to 11, wherein the mixture comprises a constant concentration of the test substance.

13. The method of any one of claims 9 to 12, wherein detecting the test substance comprises determining a mass distribution associated with the test substance and/or determining a removal efficiency associated with the test substance.

## Patentansprüche

1. System (10) zum Testen einer Fahrgastzellen-Luftqualitätsüberwachungskomponente (12) eines Fahrzeugs (14), wobei das System (10) umfasst:
einen Kanal (16), wobei der Kanal (16) eine mechanische Verbindungsschnittstelle (18) umfasst, die dazu eingerichtet ist, mit einem Lufteinlass (20) des Fahrzeugs (14) gekoppelt zu sein, dergestalt, dass der Kanal (16) und der Lufteinlass (20) des Fahrzeugs (14) in Strömungsverbindung stehen, und wobei der Kanal (16) einen ersten Einlass (22), der dazu eingerichtet ist, eine Trägersubstanz zu empfangen, und einen zweiten Einlass (24) umfasst,
eine Testsubstanzbereitstellungsvorrichtung (26), die mit dem zweiten Einlass (24) in Strömungsverbindung steht,
einen ersten Detektor (34), der dazu eingerichtet ist, die Testsubstanz zu detektieren, und dazu eingerichtet ist, die Testsubstanz in einem Innenraum des Fahrzeugs (14) oder in einem Außenbereich des Fahrzeugs (14) zu detektieren, und
**gekennzeichnet durch**
eine aktive Mischvorrichtung (32), die innerhalb des Kanals (16) angeordnet ist.

2. System (10) nach Anspruch 1, wobei der Kanal (16) einen länglichen Abschnitt (29) umfasst, wobei eine Länge (L1) des länglichen Abschnitts (29), die sich entlang einer Strömungsrichtung erstreckt, einen größten Durchmesser (D2) des länglichen Abschnitts (29) überschreitet, wobei der Durchmesser (D2) quer zur Strömungsrichtung gemessen wird.

3. System (10) nach Anspruch 2, wobei der längliche Abschnitt (29) rohrförmig ist.

4. System (10) nach einem der vorangehenden Ansprüche, wobei der Kanal (16) mindestens einen konischen Abschnitt (28, 30) umfasst, wobei sich der konische Abschnitt (28, 30) in Richtung der mechanischen Schnittstelle (18) öffnet.

5. System (10) nach Anspruch 4, wobei der Kanal (16) zwei konische Abschnitte (28, 30) umfasst, die nebeneinander angeordnet sind, wobei sich die zwei konischen Abschnitte (28, 30) hinsichtlich ihrer jeweiligen Öffnungswinkel unterscheiden.

6. System (10) nach einem der vorangehenden Ansprüche, des Weiteren umfassend einen zweiten Detektor (40), der dazu eingerichtet ist, die Testsubstanz zu detektieren, und dazu eingerichtet ist, die Testsubstanz innerhalb des Fahrzeugs (14) oder außerhalb des Fahrzeugs (14) zu detektieren.

7. System (10) nach einem der vorangehenden Ansprüche, wobei die Testsubstanzbereitstellungsvorrichtung (26) einen Partikelgenerator und/oder eine Gasversorgung umfasst.

8. System (10) nach einem der vorangehenden Ansprüche, wobei der erste Detektor (34) einen Gassensor und/oder einen Partikelzähler umfasst.

9. Verfahren zum Testen einer Fahrgastzellen-Luftqualitätsüberwachungskomponente (12) eines Fahrzeugs (14), wobei das Verfahren umfasst:
- mechanisches Koppeln eines Kanals (16) mit einem Lufteinlass (20) des Fahrzeugs (14) dergestalt, dass der Kanal (16) und der Lufteinlass (20) des Fahrzeugs (14) in Strömungsverbindung stehen,
- aktives Mischen einer Trägersubstanz und einer Testsubstanz in dem Kanal (16) durch eine aktive Mischvorrichtung (32), die innerhalb des Kanals (16) angeordnet ist,
- Zuführen eines Gemisches, das die Trägersubstanz und die Testsubstanz umfasst, am Lufteinlass (20) des Fahrzeugs (14) über den Kanal (16),
- Detektieren der Testsubstanz an einer Stelle, die einem Luftauslass (50) der Fahrgastzellen-Luftqualitätsüberwachungskomponente (12) zugeordnet ist, oder an einer Stelle, die einer Außenseite des Fahrzeugs (14) zugeordnet ist.

10. Verfahren nach Anspruch 9, wobei das Verfahren in einer Umgebung ausgeführt wird, die eine steuerbare Temperatur und eine steuerbarer Luftfeuchtigkeit besitzt.

11. Verfahren nach einem der Ansprüche 9 oder 10, wobei die Testsubstanz mindestens eines von einem Salz, einem Di-Ethyl-Hexyl-Sebacat und Ruß umfasst.

12. Verfahren nach einem der Ansprüche 9 bis 11, wobei das Gemisch eine konstante Konzentration der Testsubstanz umfasst.

13. Verfahren nach einem der Ansprüche 9 bis 12, wobei das Detektieren der Testsubstanz das Bestimmen einer mit der Testsubstanz verknüpften Massenverteilung und/oder das Bestimmen einer mit der Testsubstanz verknüpften Beseitigungseffizienz umfasst.

## Revendications

1. Système (10) destiné à tester un composant de qualité de l'air d'habitacle (12) d'un véhicule (14), le système (10) comprenant :
un conduit (16), dans lequel le conduit (16) comprend une interface de liaison mécanique (18) configurée pour être couplée à une entrée d'air (20) du véhicule (14) de telle sorte que le conduit (16) et l'entrée d'air (20) du véhicule (14) sont fluidiquement reliés, et dans lequel le conduit (16) comprend une première entrée (22) configurée pour recevoir une substance de support et une seconde entrée (24),
un dispositif de fourniture de substance de test (26) en communication fluidique avec la seconde entrée (24),
un premier détecteur (34) configuré pour détecter la substance de test et configuré pour détecter la substance de test dans un intérieur du véhicule (14) ou dans un extérieur du véhicule (14), et
**caractérisé par**
un dispositif de mélange actif (32) agencé à l'intérieur du conduit (16).

2. Système (10) selon la revendication 1, dans lequel le conduit (16) comprend une partie allongée (29), dans lequel une longueur (L1) de la partie allongée (29) s'étendant le long d'une direction d'écoulement dépasse un plus grand diamètre (D2) de la partie allongée (29), dans lequel le diamètre (D2) est mesuré transversalement à la direction d'écoulement.

3. Système (10) selon la revendication 2, dans lequel la partie allongée (29) est en forme de tube.

4. Système (10) selon l'une quelconque des revendications précédentes, dans lequel le conduit (16) comprend au moins une partie conique (28, 30), dans lequel la partie conique (28, 30) s'ouvre vers l'interface mécanique (18).

5. Système (10) selon la revendication 4, dans lequel le conduit (16) comprend deux parties coniques (28, 30) agencées adjacentes l'une à l'autre, dans lequel les deux parties coniques (28, 30) diffèrent par leurs angles d'ouverture respectifs.

6. Système (10) selon l'une quelconque des revendications précédentes, comprenant en outre un second détecteur (40) configuré pour détecter la substance de test et configuré pour détecter la substance de test à l'intérieur du véhicule (14) ou à l'extérieur du véhicule (14).

7. Système (10) selon l'une quelconque des revendications précédentes, dans lequel le dispositif de fourniture de substance de test (26) comprend un générateur de particules et/ou une alimentation en gaz.

8. Système (10) selon l'une quelconque des revendications précédentes, dans lequel le premier détecteur (34) comprend un capteur de gaz et/ou un compteur de particules.

9. Procédé destiné à tester un composant de qualité de l'air d'habitacle (12) d'un véhicule (14), le procédé comprenant de :
- coupler mécaniquement un conduit (16) à une entrée d'air (20) du véhicule (14) de telle sorte que le conduit (16) et l'entrée d'air (20) du véhicule (14) sont e communication fluidique,
- mélanger activement une substance de support et une substance de test dans le conduit (16) par un dispositif de mélange actif (32) agencé à l'intérieur du conduit (16),
- amener un mélange comprenant la substance de support et la substance de test au niveau de l'entrée d'air (20) du véhicule (14) via le conduit (16),
- détecter la substance de test à un emplacement associé à une sortie d'air (50) du composant de qualité de l'air d'habitacle (12) ou à un emplacement associé à un extérieur du véhicule (14).

10. Procédé selon la revendication 9, dans lequel le procédé est mis en œuvre dans un environnement ayant une température pouvant être régulée et une humidité pouvant être régulée.

11. Procédé selon l'une quelconque des revendications 9 ou 10, dans lequel la substance de test comprend au moins un parmi un sel, du sébacate de di-éthyl-hexyle, et de la suie.

12. Procédé selon l'une quelconque des revendications 9 à 11, dans lequel le mélange comprend une concentration constante de la substance de test.

13. Procédé selon l'une quelconque des revendications 9 à 12, dans lequel la détection de la substance de test comprend de déterminer une répartition de masse associée à la substance de test et/ou de déterminer un rendement d'extraction associé à la substance de test.
